# EUROPÄISCHE PATENTANMELDUNG

(11) **EP 1 683 604 A1**
(43) Veröffentlichungstag der Anmeldung: **26.07.2006**
(21) Anmeldenummer: 05022308.0
(22) Anmeldetag: 13.10.2005
(51) Int. Cl.: B23Q 7/04

(54) **Vorschubvorrichtung für plattenförmige Werkstücke, sowie Spannzange zur Verwendung bei einer solchen Vorschubvorrichtung**

(30) Priorität: 20.01.2005 DE 102005002595
(71) Anmelder: HOLZMA Plattenaufteiltechnik GmbH, 75365 Calw-Holzbronn (DE)
(72) Erfinder: Gröning, Peter, 75392 Deckenpfronn (DE); Hamm, Lothar, 72202 Nagold (DE)
(74) Vertreter: Knapp, Thomas

(57) **Zusammenfassung**

Eine Vorschubvorrichtung (41) für plattenförmige Werkstücke (18) umfasst eine Anlagefläche (14), an die mindestens ein plattenförmiges Werkstück (18) angelegt werden kann. Mittels mindestens einer längs der Vorschubrichtung (22) bewegbaren Greifeinrichtung (24) kann mindestens ein plattenförmiges Werkstück (18) gegriffen werden. Eine Entladeeinrichtung (42) kann eine Entladebewegung ausführen, durch die das Werkstück (18) in Vorschubrichtung (22) bewegt wird. Es wird vorgeschlagen, dass die Entladeeinrichtung (42) an der Spannzange (24) angeordnet ist.

## Beschreibung

Die Erfindung betrifft eine Vorschubvorrichtung für plattenförmige Werkstücke, mit einer Anlagefläche, an die mindestens ein plattenförmiges Werkstück angelegt werden kann, und mit mindestens einer längs der Vorschubvorrichtung bewegbaren Greifeinrichtung, mit der mindestens ein plattenförmiges Werkstück gegriffen werden kann, und mit einer Entladeeinrichtung, welche eine Entladebewegung ausführen kann, durch die das Werkstück in Vorschubrichtung bewegt wird. Die Erfindung betrifft ferner eine Greifeinrichtung, insbesondere Spannzange, zur Verwendung in einer solchen Vorschubvorrichtung.

Eine Vorschubvorrichtung und eine Greifeinrichtung der eingangs genannten Art sind aus der DE 201 03 878 U1 bekannt. Eine solche Vorschubvorrichtung kommt beispielsweise bei Plattenaufteilanlagen zum Einsatz, in denen großformatige plattenförmige Werkstücke in einzelne Platten mit kleineren Abmessungen aufgeteilt werden. Bei solchen Plattenaufteilanlagen liegen die plattenförmigen Werkstücke in Stapeln auf einem Auflagetisch. Mittels der Vorschubvorrichtung werden sie auf dem Auflagetisch zu einer Bearbeitungsvorrichtung, beispielsweise einer Säge, bewegt.

Die bekannte Vorschubvorrichtung umfasst einen in Vorschubrichtung sowie senkrecht zum Auflagetisch bewegbaren Balken, an dem mehrere Greifeinrichtungen in Form von Spannzangen befestigt sind. Jede Spannzange umfasst zwei Spannbacken, zwischen deren Klemmbereichen ein Stapel von plattenförmigen Werkstücken klemmbar ist. Hierzu ist die dem Auflagetisch benachbarte untere Klemmbacke starr, wohingegen die vom Auflagetisch entfernt angeordnete obere Klemmbacke durch eine pneumatische Stelleinrichtung bewegt werden kann.

Ist das ursprünglich sehr großformatige plattenförmige Werkstück vollständig aufgeteilt, verbleibt im Bereich der Bearbeitungsvorrichtung ein letztes Reststück. Dieses wird bei herkömmlichen Vorschubvorrichtungen beispielsweise durch einen Auswerfer in Vorschubrichtung durch den Bearbeitungsbereich hindurchbewegt, so dass es ein Benutzer der Vorschubvorrichtung dann gefahrlos aus der Anlage entnehmen kann. Ein solcher Auswerfer kann aus einem sich quer zur Vorschubrichtung erstreckenden Balken bestehen, der schwenkbar am Auflagetisch befestigt ist und pneumatisch auf den Auflagetisch herab- und dann in Vorschubrichtung bewegt wird.

Aufgabe der vorliegenden Erfindung ist es, eine Vorschubvorrichtung der eingangs genannten Art so weiterzubilden, dass sie preiswert hergestellt werden kann und die Taktzeiten bei der Benutzung der Vorschubvorrichtung verringert sind.

Diese Aufgabe wird bei einer Vorschubvorrichtung der eingangs genannten Art dadurch gelöst, dass die Entladeeinrichtung an der Greifeinrichtung angeordnet ist. Bei einer Greifeinrichtung der eingangs genannten Art wird die Aufgabe entsprechend gelöst.

Durch die Positionierung der Entladeeinrichtung unmittelbar an der Greifeinrichtung kann die Entladeeinrichtung sofort mit dem Ende des Greifvorgangs durch die Spannzange an dem entsprechenden plattenförmigen Werkstück angreifen. Es ist also nicht mehr erforderlich, dass zunächst die Spannzange vom plattenförmigen Werkstück weg bewegt und dann die Entladeeinrichtung in Anlage an das plattenförmige Werkstück gebracht wird. Hierdurch werden die Taktzeiten bei der Benutzung der erfindungsgemäßen Vorschubvorrichtung verkürzt.

Darüber hinaus kann anstelle einer großen und vergleichsweise schweren Entladeeinrichtung an der Spannzange eine kleine und leichte und somit einfach bauende Entladeeinrichtung vorgesehen werden, was die Herstellkosten der Vorschubvorrichtung insgesamt reduziert. Üblicherweise sind bei einer Vorschubvorrichtung mehrere nebeneinander quer zur Vorschubrichtung angeordnete Greifeinrichtungen, zumeist Spannzangen, vorgesehen. Bei einer erfindungsgemäßen Vorschubvorrichtung würde vorzugsweise jede Greifeinrichtung mit einer Entladeeinrichtung versehen sein. Zur Durchführung der Entladebewegung werden dann die einzelnen Entladeeinrichtungen koordiniert angesteuert.

Bei einer vorteilhaften Weiterbildung der erfindungsgemäßen Vorschubvorrichtung ist die Entladeeinrichtung in die Greifeinrichtung integriert. Dies reduziert die Abmessungen der Greifeinrichtung und verkürzt deren Montagezeit, was wiederum zu einer Kostenreduktion bei der Herstellung der erfindungsgemäßen Vorschubvorrichtung führt.

Eine weitere bevorzugte Ausgestaltung sieht vor, dass die Entladeeinrichtung mindestens einen linear beweglichen Aktor umfasst, an dessen dem Werkstück zugewandten Ende mindestens eine Anlageplatte vorhanden ist. Ein solcher Aktor kann beispielsweise ein hydraulisch, pneumatisch oder elektrisch betätigter Zylinder sein. Eine solche Entladeeinrichtung baut einfach, kann mit handelsüblichen Teilen hergestellt werden, und ist daher preiswert. Dabei kann die Größe des einzelnen Aktors verringert werden, wenn die Entladeeinrichtung mindestens zwei linear bewegliche Aktoren mit jeweils mindestens einer Anlageplatte umfasst.

Die Aktoren können auch unabhängig voneinander ansteuerbar sein, was eine Anpassung der Entladeeinrichtung an unterschiedliche Gewichte und Größen der zu entladenden Werkstücke erlaubt.

Um den Energieaufwand und/oder die Zeit zum Entladen des Werkstücks mittels der Entladeeinrichtung zu verringern, kann vorgesehen sein, dass die Greifeinrichtung eine Erfassungseinrichtung umfasst, welche feststellt, ob in der Greifeinrichtung gerade ein Werkstück gegriffen ist. In diesem Fall wird die Entladeeinrichtung nur dann aktiviert, wenn die entsprechende Greifeinrichtung tatsächlich an einem Werkstück angreift. Vor allem dann, wenn zahlreiche nebeneinander angeordnete Greifeinrichtungen vorgesehen sind, die Werkstücke unterschiedlicher Größe zu greifen haben, so dass abhängig von der Werkstückgröße mehr oder weniger Greifeinrichtungen überhaupt im Eingriff mit dem Werkstück sind, ist diese Weiterbildung hilfreich.

Eine weitere vorteilhafte Ausgestaltung der erfindungsgemäßen Vorschubvorrichtung zeichnet sich dadurch aus, dass die Entladeeinrichtung bei ihrer Entladebewegung wenigstens zeitweise ein bestimmtes Geschwindigkeitsprofil einhält. Beispielsweise durch ein "sanftes" Beschleunigen des Werkstücks während der Entladebewegung werden Beschädigungen an der der Entladeeinrichtung zugewandten Kante des Werkstücks vermieden.

In eine ähnliche Richtung zielt jene Weiterbildung, bei welcher die Entladeeinrichtung bei ihrer Entladebewegung mindestens zeitweise ein bestimmtes Kraftprofil einhält.

Vorgesehen kann ferner sein, dass die Entladeeinrichtung einen Besäumanschlag aufweist. Dieser schützt empfindliche Furnier-Rohplatten vor Beschädigung.

Nachfolgend wird ein besonders bevorzugtes Ausführungsbeispiel der vorliegenden Erfindung unter Bezugnahme auf die beiliegende Zeichnung näher erläutert. In der Zeichnung zeigen:
- Figur 1: eine schematische Seitenansicht einer Plattenaufteilanlage mit einer Vorschubvorrichtung mit einer Spannzange und einer Entladeeinrichtung in einem ersten Betriebszustand;
- Figur 2: eine Detaildarstellung der Spannzange und der Entladeeinrichtung von Figur 1;
- Figur 3: eine Darstellung ähnlich Figur 1, wobei die Plattenaufteilanlage sich in einem zweiten Betriebszustand befindet;
- Figur 4: eine Darstellung ähnlich Figur 1, wobei sich die Plattenaufteilanlage in einem dritten Betriebszustand befindet;
- Figur 5: eine Darstellung ähnlich Figur 2 in dem Betriebszustand von Figur 4;
- Figur 6: eine perspektivische detaillierte geschnittene Darstellung der Spannzange von Figur 1 in einem ersten Betriebszustand;
- Figur 7: eine Darstellung ähnlich Figur 6 in einem zweiten Betriebszustand.

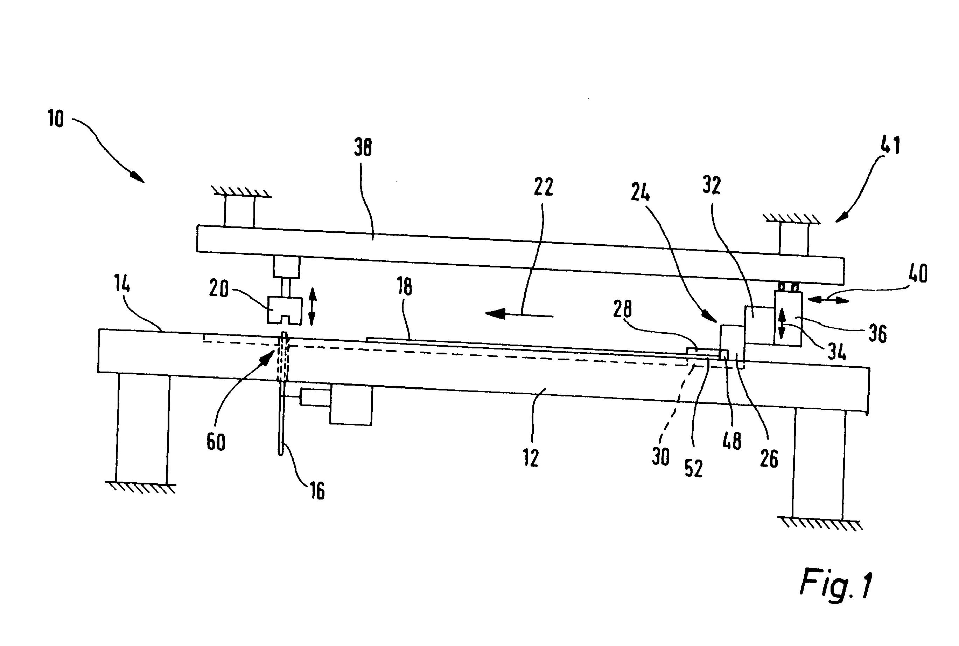

In Figur 1 trägt eine als Plattenaufteilanlage ausgebildete Bearbeitungsvorrichtung für plattenförmige Werkstücke insgesamt das Bezugszeichen 10. Sie umfasst einen horizontalen Auflagetisch 12 mit einer ebenfalls horizontalen oberen Anlagefläche 14. Als Bearbeitungsgerät ist bei der Plattenaufteilanlage 10 eine Säge 16 vorgesehen, mit der ein auf der Anlagefläche 14 liegendes plattenförmiges Werkstück 18 in einzelne Streifen aufgeteilt werden kann. Bei dem Werkstück 18 kann es sich um eine einzelne Platte handeln oder auch um einen Plattenstapel. Um während des Sägens das Werkstück 18 sicher in Position zu halten, ist oberhalb der Säge 16 ein vertikal absenkbarer Druckbalken 20 vorgesehen.

Zum Aufteilen des Werkstücks 18 in einzelne Streifen ist es erforderlich, das Werkstück 18 in Vorschubrichtung (Pfeil 22) zu bewegen. Hierzu sind mehrere in einer Richtung senkrecht zur Zeichnungsebene parallel angeordnete Greifeinrichtungen in Form von Spannzangen vorgesehen, von denen in Figur 1 nur eine mit dem Bezugszeichen 24 sichtbar ist. Sie umfasst einen Haltekörper 26, an dem zwei Spannbacken 28 und 30 angebracht sind. Die in Figur 1 obere Spannbacke 28 ist mittels einer nicht gezeigten pneumatischen Betätigungseinrichtung vertikal beweglich. Die Spannzange 24 ist an einem Schlitten 32 befestigt, welcher in vertikaler Richtung (Doppelpfeil 34) gegenüber einem senkrecht zur Plattenebene verlaufenden Balken 36 verschieblich gelagert ist. Letzterer kann wiederum längs zweier horizontaler Schienen, von denen in Figur 1 nur eine mit dem Bezugszeichen 38 sichtbar ist, längs zur Vorschubrichtung 22 bewegt werden (Doppelpfeil 40). Die Spannzange 24, der Schlitten 32, der Balken 36 und die Schiene 38 bilden insgesamt eine Vorschubvorrichtung 41.

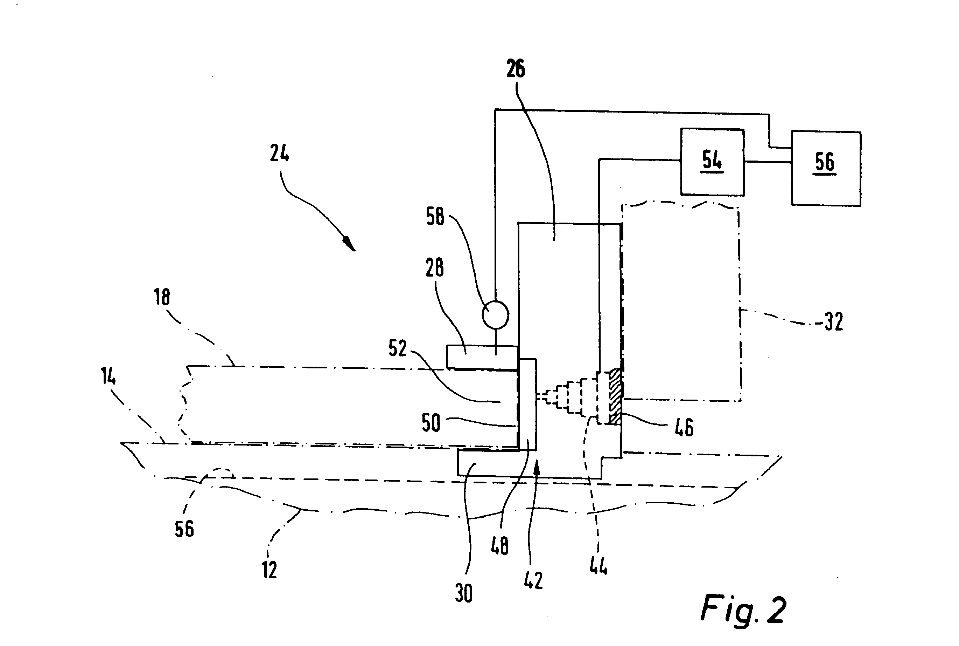

Wie insbesondere aus Figur 2 hervorgeht, ist in die Spannzange 24 eine Entladeeinrichtung 42 integriert. Diese umfasst bei dem vorliegend beschriebenen Ausführungsbeispiel zwei in einer Richtung senkrecht zur Plattenebene nebeneinander angeordnete und identische pneumatische Aktoren, von denen in Figur 2 nur der vordere mit dem Bezugszeichen 44 gezeigt ist. Der Aktor 44 ist an seinem in Figur 2 rechten Ende mit dem Haltekörper 26 der Spannzange 24 verbunden (Schraffur 46). An seinem in Figur 2 linken und abragenden Ende ist am Aktor 44 eine Anlageplatte 48 befestigt, deren Anlagefläche 50 einem im Vorschubrichtung 22 gesehen hinteren Rand 52 des Werkstücks 18 zugewandt ist und in einer senkrecht zur Blattebene von Figur 2 verlaufenden Ebene liegt.

Bei dem Aktor 44 handelt es sich um einen Pneumatikzylinder, der, wie weiter unten noch im Detail erläutert werden wird, von einer in Figur 2 gezeigten vergleichsweise kurzen Ruhelänge auf eine vergleichsweise lange Arbeitslänge ausgefahren werden kann (die Arbeitslänge kann ggf. ein Mehrfaches der Ruhelänge betragen). Hierzu ist eine Pneumatikeinheit 54 vorgesehen, welche von einer Steuer- und Regeleinrichtung 56 angesteuert wird. Am in Figur 2 oberen Spannbacken 28 ist ein Sensor 58 vorhanden, welcher erfasst, ob zwischen den beiden Spannbacken 28 und 30 ein Werkstück 18 verklemmt ist.

Die in den Figuren 1 und 2 gezeigte Plattenaufteilanlage 10 arbeitet wie folgt:

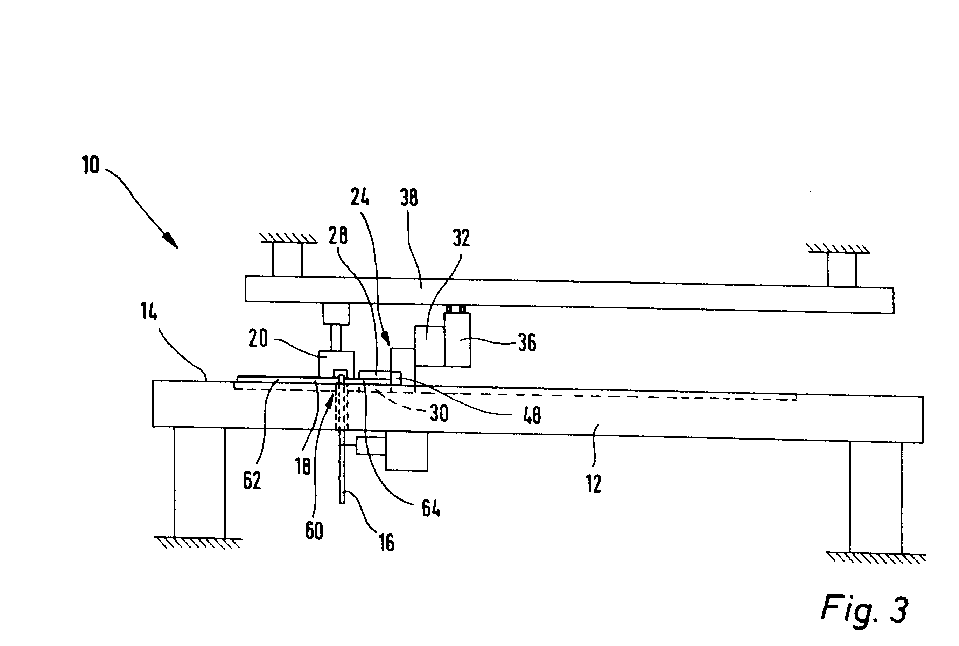

Zunächst wird der hintere Rand 52 des Werkstücks 18, wie in den Figuren 1 und 2 gezeigt ist, zwischen den beiden Spannbacken 28 und 30 der Spannzange 24 (und der ebenfalls vorhandenen anderen nicht sichtbaren Spannzangen) verklemmt. Durch eine Bewegung des Balkens 36 in Vorschubrichtung 22 wird das Werkstück der Säge 16 zugeführt. Durch entsprechende Schnitte der Säge 16 und anschließende Vorschubbewegungen mittels der Vorschubvorrichtung 41 in Vorschubrichtung 22 wird das Werkstück 18 immer weiter in einzelne Plattenstreifen aufgeteilt, wobei sich die Spannzange 24 immer mehr einem Bearbeitungsbereich 60 der Säge 16 annähert. Wie aus Figur 3 ersichtlich ist, liegt die Spannzange 24 am Ende des Bearbeitungsvorgangs in unmittelbarer Nähe des Bearbeitungsbereichs 60.

Durch die Vorschubbewegung in Vorschubrichtung 22 werden die bereits abgetrennten Plattenstreifen (Bezugszeichen 62 in Figur 3) von dem Rest (Bezugszeichen 64) des Werkstücks 18, der noch von der Spannzange 24 gehalten wird, in Figur 3 nach links aus dem Bearbeitungsbereich 60 geschoben. Um nun auch das allerletzte Reststück 64 nach links aus dem Bearbeitungsbereich 60 entfernen zu können, muss dieses von der Spannzange 24 entfernt, aus dieser also "entladen" werden.

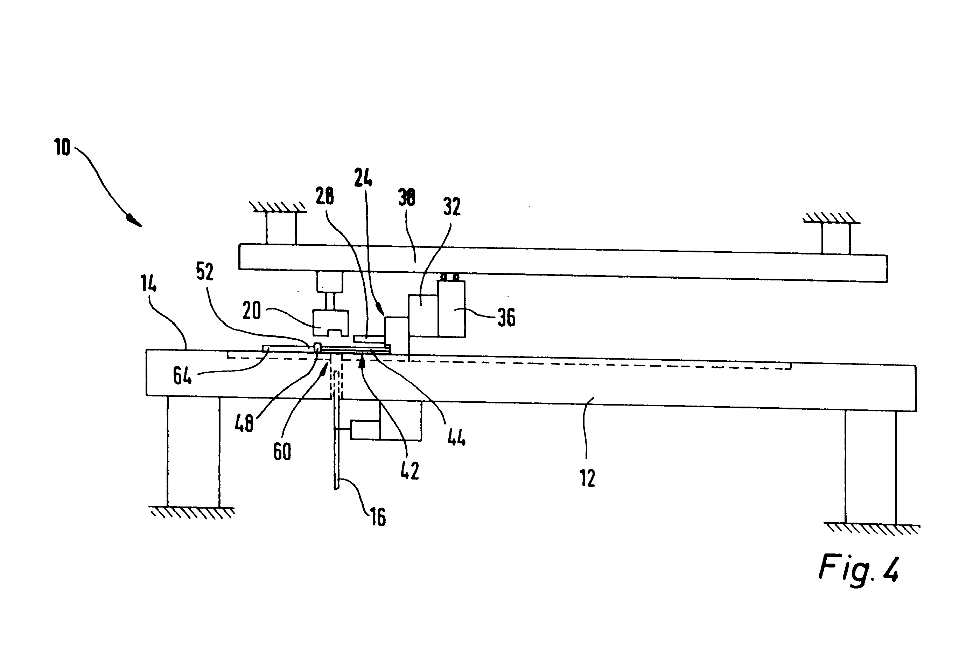

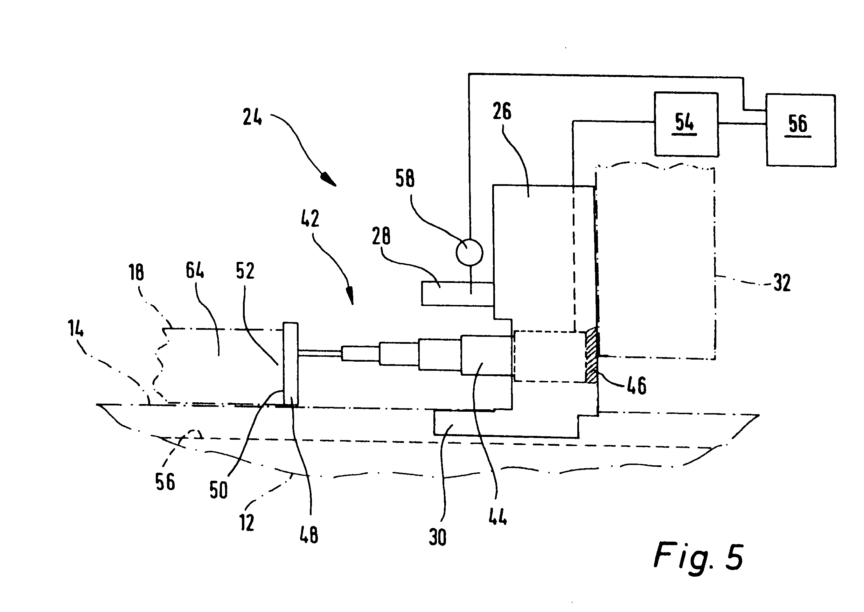

Hierzu wird, wie aus den Figuren 4 und 5 ersichtlich ist, die Entladeeinrichtung 42 aktiviert. Dies bedeutet, dass von der Pneumatikeinheit 54 (Figur 2) die Aktoren 44 unter Druck gesetzt werden, so dass diese linear von ihrer Ruhelänge auf die Arbeitslänge ausfahren und mittels der Anlageplatte 48, die am hinteren Rand 52 des Rests 64 des Werkstücks 18 angreift, diesen Rest 64 des Werkstücks 18 durch den Bearbeitungsbereich 60 hindurch und von der Spannzange 24 weg bewegen. Somit kann der Rest 64 des Werkstücks 18 von einer Bedienperson der Plattenaufteilanlage 10 entnommen werden, ohne dass diese in den Bearbeitungsbereich 60 der Säge 16 greifen muss.

Wenn das Werkstück 18 nur vergleichsweise schmal ist, so dass es nicht von sämtlichen Spannzangen 24 der Vorschubvorrichtung 41 gegriffen werden muss, wird vom Sensor 58 der jeweiligen Spannzange 24 erfasst, ob diese im Bereich des Werkstücks 18 liegt oder nicht. Dies führt dazu, dass die Pneumatikeinheit 54 nur jene Aktoren 44 ansteuert, welche zu Spannzangen 24 gehören, die an dem Werkstück 18 angreifen. Um Beschädigungen am hinteren Rand 52 des Werkstücks 18 zu vermeiden, kann die anfängliche Bewegung der Aktoren 44 vergleichsweise langsam sein. Sie kann ggf. dann entsprechend einem vorgegebenen Kraft-Zeit-oder Kraft-Weg-Profil zunehmen.

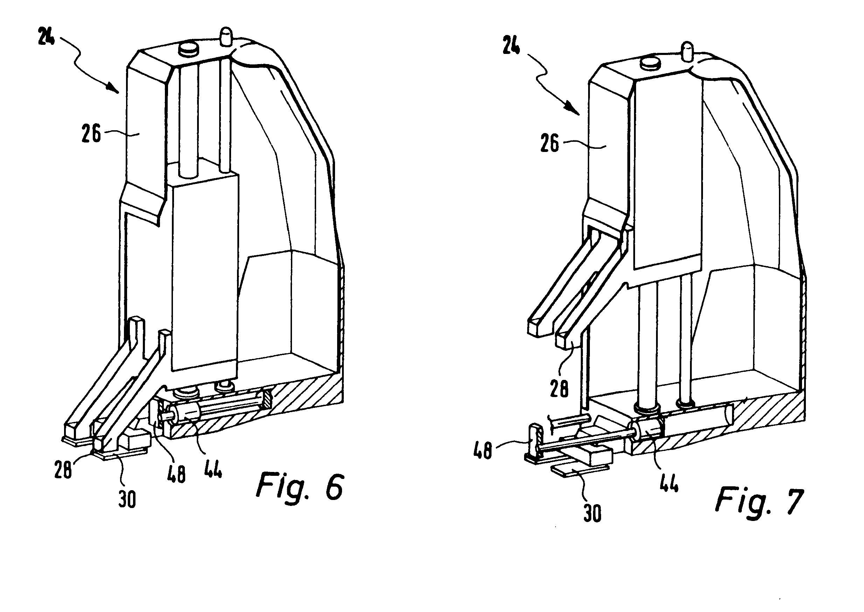

In den Figuren 6 und 7 ist die Entladebewegung der Entladeeinrichtung 42 nochmals bei einer detailliert gezeichneten Spannzange 24 dargestellt. Dabei tragen solche Elemente und Bereiche, welche äquivalente Funktionen zu Elementen und Bereichen der Figuren 1 und 5 aufweisen, die gleichen Bezugszeichen. Sie sind nicht nochmals im Detail erläutert.

An der Anlageplatte 48 kann ein Besäumanschlag vorhanden sein. An diesen kann der Kern einer Furnierplatte angelegt werden. Hierdurch wird verhindert, dass die an einer Roh-Furnierplatte vor dem Besäumschnitt noch überstehenden Furniere von der Anlageplatte beschädigt werden. Ein solcher Besäumanschlag kann in der Art eines vertikalen Rechens ausgebildet sein, dessen "Zinken" zwischen die überstehenden Furnierränder ein- und am Kern der Furnierplatte angreifen. Gegebenenfalls kann der Besäumanschlag auch manuell oder beispielsweise pneumatisch weggeklappt werden.

## Patentansprüche

1. Vorschubvorrichtung (41) für plattenförmige Werkstücke (18), mit einer Anlagefläche (14), an die mindestens ein plattenförmiges Werkstück (18) angelegt werden kann, mit mindestens einer längs der Vorschubrichtung (22) bewegbaren Greifeinrichtung (24), mit der mindestens ein plattenförmiges Werkstück (18) gegriffen werden kann, und mit einer Entladeinrichtung (42), welche eine Entladebewegung ausführen kann, durch die das Werkstück (18) in Vorschubrichtung (22) bewegt wird, **dadurch gekennzeichnet, dass** die Entladeeinrichtung (42) an der Greifeinrichtung (24) angeordnet ist.

2. Vorschubvorrichtung (41) nach Anspruch 1, **dadurch gekennzeichnet, dass** die Entladeeinrichtung (42) in die Spannzange (24) integriert ist.

3. Vorschubvorrichtung (41) nach einem der Ansprüche 1 oder 2, **dadurch gekennzeichnet, dass** die Entladeeinrichtung (42) mindestens einen linear beweglichen Aktor (44) umfasst, an dessen dem Werkstück (18) zugewandten Ende mindestens eine Anlageplatte (48) vorhanden ist.

4. Vorschubvorrichtung (41) nach Anspruch 3, **dadurch gekennzeichnet, dass** die Entladeeinrichtung (42) mindestens zwei linear bewegliche Aktoren (44) mit jeweils mindestens einer Anlageplatte (48) umfasst.

5. Vorschubvorrichtung (41) nach Anspruch 4, **dadurch gekennzeichnet, dass** die Aktoren (44) unabhängig voneinander ansteuerbar sind.

6. Vorschubvorrichtung (41) nach einem der vorhergehenden Ansprüche, **dadurch gekennzeichnet, dass** die Greifeinrichtung (24) eine Erfassungseinrichtung (58) umfasst, welche feststellt, ob in der Greifeinrichtung (24) gerade ein Werkstück (18) gegriffen ist.

7. Vorschubvorrichtung (41) nach einem der vorhergehenden Ansprüche, **dadurch gekennzeichnet, dass** die Entladeeinrichtung (42) bei ihrer Entladebewegung wenigstens zeitweise ein bestimmtes Geschwindigkeitsprofil einhält.

8. Vorschubvorrichtung (41) nach einem der vorhergehenden Ansprüche, **dadurch gekennzeichnet, dass** die Entladeeinrichtung (42) bei Ihrer Entladebewegung wenigstens zeitweise ein bestimmtes Kraftprofil einhält.

9. Vorschubvorrichtung (41) nach einem der vorhergehenden Ansprüche, **dadurch gekennzeichnet, dass** die Entladeeinrichtung (42) einen Besäumanschlag aufweist.

10. Greifeinrichtung, insbesondere Spannzange (24), zur Verwendung bei einer Vorschubvorrichtung (41) für plattenförmige Werkstücke (18), mit der mindestens ein plattenförmiges Werkstück (18) gegriffen und in einer Vorschubrichtung (22) bewegt werden kann, **dadurch gekennzeichnet, dass** die Greifeinrichtung (24) eine Entladeinrichtung (42) umfasst, welche eine Entladebewegung ausführen kann, durch die das Werkstück (18) in Vorschubrichtung (22) bewegt wird.
